(19) Europäisches Patentamt / European Patent Office / Office européen des brevets

(11) **EP 4 367 149 B1**

(12) **EUROPEAN PATENT SPECIFICATION**

(45) Date of publication and mention of the grant of the patent:
**14.05.2025 Bulletin 2025/20**

(21) Application number: **22746990.5**

(22) Date of filing: **07.07.2022**

(51) International Patent Classification (IPC):
**C08C 19/02** *(2006.01)*    **H01M 4/62** *(2006.01)*
**C08F 236/06** *(2006.01)*    **C08F 220/44** *(2006.01)*
**C08F 220/26** *(2006.01)*

(52) Cooperative Patent Classification (CPC):
(C-Sets available)
**C08C 19/02; H01M 4/622;** H01M 2004/028;
Y02E 60/10                                    (Cont.)

(86) International application number:
**PCT/EP2022/068832**

(87) International publication number:
**WO 2023/280963 (12.01.2023 Gazette 2023/02)**

(54) **ACETOACETOXYALKYL GROUP CONTAINING NITRILE RUBBERS AND USE AS POSITIVE CATHODE BINDER**

ACETOACETOXYALKYLGRUPPENHALTIGE NITRILKAUTSCHUKE UND VERWENDUNG ALS BINDEMITTEL FÜR POSITIVE KATHODEN

CAOUTCHOUCS NITRILES CONTENANT UN GROUPE ACETOACETOXYALKYL ET UTILISATION COMME LIANT POUR CATHODE POSITIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **09.07.2021  EP 21184822**

(43) Date of publication of application:
**15.05.2024 Bulletin 2024/20**

(73) Proprietor: **ARLANXEO Deutschland GmbH 41540 Dormagen (DE)**

(72) Inventor: **BRANDAU, Sven 51371 Leverkusen (DE)**

(56) References cited:
**EP-A1- 3 605 675     US-A1- 2007 100 081
US-B1- 6 624 274**

EP 4 367 149 B1

(52) Cooperative Patent Classification (CPC): (Cont.)

C-Sets
**C08F 236/12, C08F 4/34;**
C08F 236/06, C08F 220/44, C08F 220/26

## Description

### Field of Invention

The present invention relates to nitrile rubber polymers, in particular polymers consisting the monomer units acrylonitrile, 1,3-butadiene and acetoacetoxyethyl methacrylate. Furthermore the present invention relates to a use of the polymers as a binder in a rechargeable battery.

### Background of Invention

A rechargeable battery (also known as a storage battery, a secondary cell or an accumulator) is a type of electrical battery which can be charged, discharged and recharged many times.

The rechargeable battery comprises an anode, a cathode, an electrolytic solution and a separator. A binder is also present within the rechargeable battery and is usually a polymer. The binder holds active material and conductive material within electrodes (the anode and the cathode) of the rechargeable battery. The binder needs the following characteristics: flexible, insoluble in the electrolyte, have a good adherence to a current collector, be chemically and electrochemically stable and easy to apply to the electrodes.

A common binder for the positive cathode is a polyvinylidene fluoride polymer (PVDF). Binders based on or using PVDF have drawbacks in that the fluorine contained within causes corrosion within the rechargeable battery and is inherently unsafe. Binders based on or using PVDF have a relatively high density and are thus undesirable as they cause an increase in weight of the resultant rechargeable battery and a device holding the rechargeable battery. Binders based on or using PVDF require safety measures when handling as the fluorine contained within can form hydrogen fluoride, which requires handling precautions.

EP3605675A1 discloses a polymer and its use as a binder. The polymer contains a conjugated diene monomer unit (e.g. 1,3-butadiene) and/or an alkylene structural unit and a nitrile group-containing monomer unit (e.g. acrylonitrile) and optionally other repeating units (e.g. (meth)acrylic acid ester monomers, such as n-butyl acrylate). The polymer is used with PVDF.

There is a need to overcome the aforementioned problems of the prior art. There is a need to provide an alternative polymer and its use as a positive cathode binder, to not only maintain the binder characteristics above but also provide enhanced characteristics as those in the prior art.

### Summary of Invention

The aforementioned problems are solved by the present invention.

In a first aspect the present invention relates to a polymer, the polymer consisting of the monomer units acrylonitrile, 1,3-butadiene and acetoacetoxyethyl methacrylate.

In a further aspect the present invention relates to a use of the polymer as a positive cathode binder for a rechargeable battery.

The polymer and the polymer as positive cathode binder provide an at least suitable alternative to those according the prior art whilst overcoming the need to use polyvinylidene fluoride (PVDF).

The polymer and the polymer as positive cathode binder is free from PVDF. This which overcomes safety issues and overcomes issues with respect to corrosion during manufacture and use in battery applications.

The polymer and thus the polymer as positive cathode binder exhibits at least the same or superior properties to those of the prior art based on PDVF.

The polymer and the polymer as positive cathode binder has a lower density to those of the prior art based on PDVF and are therefore favourable due to its reduced weight in portable devices or electric vehicles using a rechargeable battery.

The polymer as positive cathode binder has an increased peel strength i.e. higher adhesion to a current collector than those of the prior art based on PDVF ensuring longer operational life of a battery.

The polymer and thus the polymer as positive cathode binder have increased passage conductivity.

The polymer and thus the polymer as positive cathode binder maintain capacity retention after being charged, discharged and recharged.

### Detailed Description

For a complete understanding of the present invention and the advantages thereof, reference is made to the following detailed description.

It should be appreciated that the various aspects and embodiments of the detailed description as disclosed herein are illustrative of the specific ways to make and use the invention and do not limit the scope of invention when taken into consideration with the claims and the detailed description. It will also be appreciated that features from different aspects and embodiments of the invention may be combined with features from different aspects and embodiments of the invention.

In a first aspect the present invention relates to a polymer, the polymer consisting of the monomer units acrylonitrile, 1,3-butadiene and acetoacetoxyethyl methacrylate.

The term monomer units means that a structural unit derived from that monomer is included in the polymer obtained using that monomer.

Acetoacetoxyethyl methacrylate is also known as 2-(Methacryloyloxy) ethyl acetoacetate, (2-Acetoacetoxy) ethyl methacrylate, AAEM and ethylene glycol monoacetoacetate monomethacrylate.

The polymer can be a hydrogenated polymer, meaning at least partially hydrogenated to fully hydrogenated, the hydrogenated polymer is obtained by hydrogenating the polymer. To be fully hydrogenated, residual double bonds are <1 %, to be partially hydrogenated, residual double bonds are <5 - c.a. 6%.

Where the polymer is not hydrogenated, the monomer units acetoacetoxyethyl methacrylate are present in the polymer in an amount of 3 - 10 wt.-%. Where the polymer is hydrogenated, the monomer units acetoacetoxyethyl methacrylate are present in the polymer in an amount of 0.5 - 7 wt.-%.

The monomer units acetoacetoxyethyl methacrylate preferably fall in the aforementioned ranges, if higher than the noted range, then a self-polymerisation of the monomer units acetoacetoxyethyl methacrylate occurs during a manufacture of the polymer. The aforementioned ranges ensure the monomer units acetoacetoxyethyl methacrylate are incorporated within the polymer.

Where the polymer is not hydrogenated, the polymer comprises the following monomer units based on wt.-%. The monomer units acrylonitrile are present in the polymer in an amount of 18 - 50 wt.-%. The monomer units 1,3-butadiene are present in the polymer in an amount of 40 - 80 wt.-%. The monomer units acetoacetoxyethyl methacrylate are present in the polymer in an amount of more than 0 - 10 wt.-%.

A Mooney viscosity (ML 1+4@100°C), where the polymer is not hydrogenated is in a range of 20 - 70 MU.

Where the polymer is hydrogenated, the polymer comprises the following monomer units based on wt.-%. The monomer units acrylonitrile are present in the polymer in an amount of 30 - 45 wt.-%. The monomer units 1,3-butadiene are present in the polymer in an amount of 50 - 65 wt.-%. The monomer units acetoacetoxyethyl methacrylate are present in the polymer in an amount of 0.5 - 7 wt.-%.

A Mooney viscosity (ML 1+4@100°C), where the polymer is hydrogenated is a range of 60 - 90 MU.

In an embodiment where the polymer is not hydrogenated, the polymer comprises the following preferable monomer units based on wt.-%; Acrylonitrile 41.2 wt.-%, 1,3-butadiene 49.4 wt.-% and acetoacetoxyethyl methacrylate 9.4 wt.-%. This embodiment shows extremely high passage conductivity (see example F below).

In an embodiment where the polymer the polymer is not hydrogenated, the polymer comprises the following preferable monomer units based on wt.-%; Acrylonitrile 41.2 wt.-%, 1,3-butadiene 54 wt.-% and acetoacetoxyethyl methacrylate 4.8 wt.-%. This embodiment shows extremely high passage conductivity (see example D below).

In an embodiment where the polymer is hydrogenated, the polymer comprises the following preferable monomer units based on wt.-%; Acrylonitrile 39.3 wt.-%, 1,3-butadiene 59.9 wt.-% and acetoacetoxyethyl methacrylate 6.3 wt.-%. This embodiment shows extremely high passage conductivity (see example L below).

In an embodiment where the polymer is hydrogenated, the polymer comprises the following preferable monomer units based on wt.-%; Acrylonitrile 40.3 wt.-%, 1,3-butadiene 56.1 wt.-% and acetoacetoxyethyl methacrylate 3.6 wt.-%. This embodiment shows extremely high passage conductivity (see example K below).

In an embodiment where the polymer is not hydrogenated, the polymer comprises the following preferable monomer units based on wt.-%; Acrylonitrile 45.9 wt.-%, 1,3-butadiene 49.7 wt.-% and acetoacetoxyethyl methacrylate 4.4 wt.-%. This embodiment shows extremely high peel strength (see example G below).

In an embodiment where the polymer is not hydrogenated, the polymer comprises the following preferable monomer units based on wt.-%; Acrylonitrile 40.8 wt.-%, 1,3-butadiene 54.5 wt.-% and acetoacetoxyethyl methacrylate 4.1 wt.-%. This embodiment shows extremely high peel strength (see example C below).

In an embodiment where the polymer is hydrogenated, the polymer comprises the following preferable monomer units based on wt.-%; Acrylonitrile 41 wt.-%, 1,3-butadiene 52.7 wt.-% and acetoacetoxyethyl methacrylate 3.8 wt.-%. This embodiment shows extremely high peel strength (see example M below).

A method for the manufacture of the polymer is not limited and the method can be according to methods known in the art. The method for the manufacture of the polymer can be any of solution polymerisation, suspension polymerisation, bulk polymerisation and emulsion polymerisation. The method for the manufacture of the polymer may be addition polymerisation, such as ionic polymerisation, radical polymerisation and living radical polymerisation.

A method for the manufacture of the hydrogenated polymer is likewise not limited. The method for the manufacture of the hydrogenated polymer can be any one of an oil-layer hydrogenation or a water-layer hydrogenation. A hydrogenation catalyst used in the manufacture of the hydrogenated polymer may be any hydrogenation catalyst known in the art, such as a palladium-based catalyst and a rhodium-based catalyst or any combination thereof.

In a further aspect the present invention relates a use of the polymer as positive cathode binder for a rechargeable battery. The binder holds active material and conductive material within positive cathode of the rechargeable battery.

The polymer is dissolved and/or dispersed in an organic solvent to form a binder solution.

The polymer can be ground prior to being dissolved and/or dispersed using a ball mill, a sand mill, a bead mill, a pigment disperser, a grinding machine, an ultrasonic disperser, a homogeniser, a planetary mixer. Such devices can also be used to facilitate the dissolving and and/or dispersing the polymer in the organic solvent to form the binder solution.

The organic solvent can be N-methylpyrrolidone (NMP), N,N-dimethylformamide and acetone. The organic solvent is preferably N-methylpyrrolidone (NMP) as it ensures solubility of the polymer and compatibility (i.e. no unfavourable side-reactions) with the organic solvent.

The binder solution is then mixed with active material and conductive material to form a cathode slurry composition.

The active material can be a lithium nickel manganese cobalt oxide (abbreviated as Li-NMC, LNMC, NMC or NCM), which is a mixed metal oxides of lithium, nickel, manganese and cobalt. The active material can be a lithium iron phosphate (LFP). The active material can be a lithium manganese oxide (LMO).

The conductive material can be carbon materials such as carbon black (e.g. acetylene black, furnace black), graphite (graphene), carbon fibres (carbon nanofibers, carbon nanotubes (CNTs) and vapour-grown carbon fibres) and carbon flakes.

The cathode slurry composition is then applied to a current collector and then dried.

The application to the current collector can be by doctor blading, dip coating, reverse roll coating, direct roll coating, gravure coating, extrusion coating, bar coater and brush coating. A thickness of the cathode slurry composition on the current collector after application but before drying may be set as appropriately.

The current collector is a material having electrical conductivity and electrochemical durability. The current collector can be made of iron, copper, aluminium, nickel, stainless steel, titanium, tantalum, gold or platinum. The current collector can be in the form of a foil. The current collector is preferably aluminium foil due to its high conductivity, electrochemical and chemical stability and low cost.

Drying of the cathode slurry composition applied to at least one surface of a current collector is achieved by warm, hot, or low humidity air at ambient pressure; drying in a vacuum, drying by irradiation with infrared light or drying with electron beams can also be used.

Following drying, the cathode slurry composition applied to the current collector may be pressed, by mould pressing or roll pressing. The pressing provides a more uniform layer of the dried material.

The resultant positive cathode, comprising the polymer as positive cathode binder is then assembled to form the rechargeable battery.

The rechargeable battery is assembled, by stacking the positive cathode and a negative electrode with a separator in-between, rolling or folding the resultant stack can be necessary in accordance with a shape of the rechargeable battery to place the stack in a battery vessel, filling the battery vessel with an electrolytic solution and then sealing the battery vessel.

In order to prevent pressure increase inside the rechargeable battery and occurrence of over-charging or over-discharging, an overcurrent preventing device such as a PTC device or a fuse; an expanded metal (such as a nickel sponge); or a lead plate can be provided as necessary.

The shape of the rechargeable battery may for example be a coin type, button type, sheet type, cylinder type, prismatic type or flat type.

The negative electrode may be any known negative electrode, for example carbon materials such as amorphous carbon, natural graphite, artificial graphite, natural black lead, mesocarbon microbead pitch-based carbon fiber and silicon-graphite; a conductive polymer such as polyacene or polyaniline; or a metal such as silicon, tin, zinc, manganese, iron, lithium (for half cells) and nickel including an alloy of the metal. The negative electrode is preferably graphite or silicon-graphite.

The separator can be a fine porous membrane or a nonwoven fabric comprising polyamide resins. The fine porous membrane can be made of a polyolefin resin (polyethylene, polypropylene, polybutene, or polyvinyl chloride). The polyolefin resin is preferred since such a separator membrane can reduce a total thickness of the separator, which increases the ratio of the active material and conductive material in the rechargeable battery and ultimately a size of the rechargeable battery.

The electrolytic solution is a solution of supporting electrolyte that is dissolved in an organic solvent. The supporting electrolyte is a lithium salt, such as $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$ and $(C_2F_5SO_2)NLi$. $LiPF6$ is preferable as it readily dissolves in a solvent and exhibits a high degree of dissociation. The organic solvent can carbonates such as dimethyl carbonate (DMC), ethylene carbonate (EC), fluoroethylene carbonate (FEC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulphur-containing compounds such as sulfolane and dimethyl sulfoxide.

Test methods

A microstructure and content of the monomer units of the polymers is determined by $^1$H NMR spectroscopy (Bruker DPX400 with XWIN-NMR 3.1 software, 400 MHz, solvent $CDCl_3$).

Mooney viscosity (ML 1+4@100°C) is determined by a shearing disc viscometer to DIN 53523/3 or ASTM D 1646 at 100°C.

Passage conductivity is measured by pressing polymer samples at 120°C to a film thickness of approximately 0.5 mm. The films are then applied with a voltage of 1000 V for 5 minutes according to ASTM D257.

Peel strength is determined according to ASTM D903. A cathode sheet is cut into test strips with a width of 25 mm and 175 mm length. 3M vinyl electrical tape was bonded onto the coated cathode material surface of the cathode sheet. The peel strength test was carried out on the test strips through an Instron tensile machine peeling the tape in a 180° direction at a rate of 100 mm/min. The peel force was recorded during the test. The peel strength was calculated according to the following formula:

$$Peel\ strength\ [N/m] = \frac{Peel\ force\ [Newtons]}{Width\ [0.0175\ m]}$$

An average peel strength was calculated basing on the data among 50-200 mm displacement and an average of three measurements was taken as a peel strength value. The peel strength was calculated using PVDF as a reference and is given in the examples below in a percentage towards the reference.

Discharging specific capacity - A manufactured rechargeable battery (coin cell) is charged at 0.2 C rate at 23°C until the rechargeable battery voltage reached 4.2 V. Subsequently after 20 minutes, at 23°C, a constant current discharge was performed at 0.2 C rate until the rechargeable battery voltage reached 2.75 V. The rechargeable battery was charged and discharged thereafter in constant current mode (CC mode 0.2 C rate). Between every cycle. The rechargeable battery is then rested for 5 min. The discharging specific capacity of the rechargeable battery was calculated as the average of 5 cycles.

Capacity retention - A manufactured rechargeable battery (coin cell) is charged and discharged in constant current mode (CC mode 0.2 C rate) for 30 cycles. Capacity retention was determined as the ratio of the discharge specific capacity after 30 cycles over the discharge specific capacity after the second cycle in percent.

Examples

The present invention is demonstrated by the following non-limiting examples.

The following materials where used as provided:
Monomer units acrylonitrile, butyl acrylate and acetoacetoxyethyl methacrylate from Sigma-Aldrich, 1,3-butadiene from INEOS.

Solution Fe(II)$SO_4$: Premix solution contains 0.986 g Fe(II)$SO_4$ * 7 $H_2O$ and 2.0 g Rongalit® C in 400g water.

EDTA: as complexing agent from Sigma-Aldrich.

Fatty acid: CAS 67701-08-8, emulsifier for polymerisation.

SDS: Sodium dodecyl sulfate CAS 151-21-3, emulsifier for polymerisation.

Rosin acid: Na salt of disproportionated rosin acid CAS 61790-51-0.

t-DDM: Molecular weight regulator from Arlanxeo Deutschland GmbH.

Trigonox® NT50, p-menthane hydroperoxide from Akzo-Degussa. Initiator for emulsion polymerisation.

Diethylhydroxylamine: polymerisation terminator, CAS 3710-84-7.

Antioxidant: equal mix of Irganox® 1520 - 2-Methyl-4,6-bis(octylsulfanylmethyl)phenol (BASF AG, Germany), Irganox® 1076 - n-Octadecyl-$\beta$-(4-hydroxy-3,5-di-tert-butyl-phenyl)-propionate (BASF AG, Germany) and Wingstay® L - Poly(dicyclopentadiene-co-p-cresol) (Omnova, Italy).

Dry monochlorobenzene (MCB) from VWR.

Wilkinson catalyst from Materia Inc. and triphenylphosphine from VWR as hydrogenation catalyst.

Lithium-nickel-cobalt-manganese-oxide: active material; (3/3/3 type 8.0 to 13.0 $\mu$m) from Jining WuJie Sci. Tech Co., Ltd.

Conductive carbon black: conductive material; Super P; from TIMCAL company.

Aluminium foil: current collector; thickness 20 $\mu$m; from China Aluminium Shanxi New Material Co.

N-methyl pyrrolidone (NMP): solvent; 99.9% battery grade from Shandong YunChangXin Chemical Tech. Co.

Lithium disc: anode; ø 16 mm from China Energy Lithium Co., Ltd.

Porous polyolefin film: as separator, thickness 38 μm (Celgard 2340), punched into ø 18 mm disc; from Celgard.

Electrolytic solution supporting electrolyte $LiPF_6$ (Aldrich). Electrolytic solution: 1M in EC/DEC mixture, EC-DEC=50/50 (v/v). Ethylene carbonate (EC): organic solvent used for the electrolytic solution: 98% from Aladdin Industrial Corporation. Diethyl carbonate (DEC): organic solvent used for the electrolytic solution: CP grade, 99.0% from Shanghai Ning Feng Chemical Reagent Co.

Battery vessel: coin cell: casing; 2032 type from ShanXi LiZhiYuan Battery Material Co.

Overcurrent preventing device: nickel sponge: thickness of 1mm per layer, for each coin cell 4 layers were used, from Changsha LiYuan New Material Co.

3M tape: vinyl electrical tape (width of 17.5 mm) from 3M China Company.

Method for the manufacture of inventive polymer (un-hydrogenated)

The following describes a method for the manufacture of the polymer comprising monomer units acrylonitrile, 1,3-butadiene and acetoacetoxyethyl methacrylate and hydrogenated versions thereof.

Also described is a method for the manufacture of a comparative example polymer according to EP3605675 comprising monomer units acrylonitrile, 1,3-butadiene and n-butyl acrylate (as (meth)acrylic acid ester monomers). n-butyl acrylate was chosen as it most structurally similar to the monomer unit acetoacetoxyethyl methacrylate according to the present invention.

The components used were according to Table 1 for the manufacture of the polymer comprising monomer units acrylonitrile, 1,3-butadiene and acetoacetoxyethyl methacrylate.

**Table 1.** Components used for the manufacture of polymer

| Ingredients (phm) | Polymer | | | | | | | |
|---|---|---|---|---|---|---|---|---|
| | A | B | C | D | E | F | G | H |
| Acrylonitrile | 16.0 | 35.0 | 51.8 | 51.8 | 51.8 | 51.8 | 65.0 | 29.0 |
| 1,3-butadiene | 78.0 | 60.0 | 43.2 | 43.2 | 43.2 | 38.2 | 29.0 | 65.0 |
| Acetoacetoxyethyl methacrylate | 6.0 | 5.0 | 5.0 | 5.0 | 5.0 | 10.0 | 6.3 | 6.0 |
| Water | 200 | 200 | 200 | 200 | 200 | 200 | 200 | 200 |
| Fatty acid | 2.16 | 2.16 | 2.16 | 2.16 | 2.16 | 2.16 | 2.16 | 2.16 |
| Rosin acid | 0.25 | 0.25 | 0.25 | 0.25 | 0.25 | 0.25 | 0.25 | 0.25 |
| pH ($\pm$ 0.5) | 10.5 | 10.5 | 10.5 | 10.5 | 10.5 | 10.5 | 10.5 | 10.5 |
| t-DDM | 0.7 | 0.7 | 0.75 | 0.7 | 0.6 | 0.8 | 0.8 | 0.7 |
| Trigonox® NT 50 | 0.02 | 0.02 | 0.02 | 0.02 | 0.02 | 0.02 | 0.02 | 0.02 |
| Solution Fe(II)$SO_4$ | 0.03 | 0.02 | 0.02 | 0.02 | 0.02 | 0.02 | 0.02 | 0.02 |
| Diethylhydroxylamine | 0.2 | 0.2 | 0.2 | 0.2 | 0.2 | 0.2 | 0.2 | 0.2 |
| Polymerisation temp (°C) ($\pm$ 0.5) | 12.5 | 12.5 | 12.5 | 12.5 | 12.5 | 12.5 | 12.5 | 12.5 |
| Conversion (%) | 74.2 | 75.5 | 72.9 | 65.3 | 73.7 | 73.3 | 63.7 | 63.0 |

The respective polymer was produced batchwise in a 5L autoclave with a stirrer system. In each of the autoclave batch, 1.25 kg of a mixture of monomers, a total amount of water of 2.1 kg was used, as was EDTA in an equimolar amount based on Fe(II) from the Fe(II)$SO_4$ 1.9 kg of this amount of water were initially charged with emulsifier (fatty acid and acid) in the autoclave and purged with a stream of nitrogen. The t-DDM were added and the reactor was closed. Once the contents were brought to polymerisation temperature, polymerisation was initiated by the addition of the solution Fe(II)$SO_4$ premix solution and Trigonox® NT50. The polymerisation was monitored by gravimetric determinations of conversion. On attainment of the conversion shown in Table 1, the polymerisation was stopped by adding a 25% aqueous solution of diethylhydroxylamine.

Unconverted monomers (i.e. non-polymerised) and remaining volatiles were removed by steam distillation.

A 50% dispersion of antioxidant were mixed with a dispersion of polymer and adjusted to a solid content of 17.5 % by weight.

To the resulting dispersion was slowly added, with vigorous stirring to an aqueous solution of calcium chloride (conc. of 0.34 % by weight) at a constant pH of 6 at 60°C. A resultant coagulated polymer was then washed water (adjusted to pH 6 with acetic acid or HCl) at a temperature of 60°C and dried for 16 hours in a vacuum oven to provide the respective polymers, the monomer unit content and Mooney viscosity of which are shown in Table 1a.

**Table 1a.** Monomer unit content and Mooney viscosity of polymers made according to Table 1

| Polymer | A | B | C | D | E | F | G | H |
|---|---|---|---|---|---|---|---|---|
| Acrylonitrile (wt.-%) | 18.3 | 34.4 | 40.8 | 41.2 | 41.3 | 41.2 | 45.9 | 49.0 |
| 1,3-butadiene (wt.-%) | 77.6 | 61.9 | 54.5 | 54 | 54.3 | 49.4 | 49.7 | 43.6 |
| Acetoacetoxyethyl methacrylate (wt.-%) | 4.1 | 3.7 | 4.7 | 4.8 | 4.4 | 9.4 | 4.4 | 7.4 |
| Mooney Viscosity | 29 | 35 | 27 | 32 | 68 | 20 | 38 | 63 |

Method for the manufacture of inventive hydrogenated polymer and hydrogenated comparative example

The following describes a method for the manufacture of the hydrogenated polymer comprising monomer units acrylonitrile, 1,3-butadiene and acetoacetoxyethyl methacrylate.

Also described is a method for the manufacture of a comparative hydrogenated example polymer (O*) according to EP3605675 comprising monomer units acrylonitrile, 1,3-butadiene and n-butyl acrylate (as (meth)acrylic acid ester monomers). n-butyl acrylate was chosen as it is the most structurally similar to the monomer unit acetoacetoxyethyl methacrylate according to the present invention.

The components used were according to Table 2.

**Table 2.** Components used for the manufacture of polymer

| Ingredients (phm) | Polymer (from) | | | | | | |
|---|---|---|---|---|---|---|---|
| | I (B) | J (C) | K (D) | L (F) | M (G) | N (H) | O* |
| Acrylonitrile | 35.0 | 51.8 | 51.8 | 51.8 | 65.0 | 51.8 | 34 |
| 1,3-butadiene | 60.0 | 43.2 | 43.2 | 38.2 | 29.0 | 43.2 | 58 |
| Acetoacetoxyethyl methacrylate | 5.0 | 5.0 | 5.0 | 10.0 | 6.3 | 5.0 | 0 |
| n-butyl acrylate | 0 | 0 | 0 | 0 | 0 | 0 | 8 |
| Water | 200 | 200 | 200 | 200 | 200 | 200 | 200 |
| Fatty acid | 2.16 | 2.16 | 2.16 | 2.16 | 2.16 | 2.16 | 0 |
| SDS | 0 | 0 | 0 | 0 | 0 | 0 | 2.0 |
| Rosin acid | 0.25 | 0.25 | 0.25 | 0.25 | 0.25 | 0.25 | 0.4 |
| pH ($\pm$ 0.5) | 10.5 | 10.5 | 10.5 | 10.5 | 10.5 | 10.5 | 5.0 |
| t-DDM | 0.7 | 0.75 | 0.75 | 0.8 | 0.8 | 0.8 | 0.8 |
| Trigonox® NT 50 | 0.02 | 0.02 | 0.02 | 0.02 | 0.02 | 0.02 | 0.02 |
| Solution Fe(II)SO$_4$ | 0.02 | 0.02 | 0.02 | 0.02 | 0.02 | 0.02 | 0.02 |
| Diethylhydroxylamine | 0.2 | 0.2 | 0.2 | 0.2 | 0.2 | 0.2 | 0.2 |
| Polymerisation temperature (°C) ($\pm$ 0.5) | 12.5 | 12.5 | 12.5 | 12.5 | 12.5 | 12.5 | 12.5 |
| Conversion (%) | 75.5 | 72.9 | 72.9 | 73.3 | 63.7 | 75.0 | 78.0 |
| Hydrogenation catalyst | 0.065 | 0.065 | 0.035 | 0.065 | 0.065 | 0.065 | 0.065 |

The hydrogenations were carried out in a 10 L high pressure reactor under the following conditions:

Solids concentration: 12 - 13 % by weight of polymer in MCB

Reactor temperature: 137 - 140 °C

Reaction time: up to 4 hours

Catalyst: Wilkinson catalyst, triphenylphosphine as co-catalyst

Hydrogen pressure: 8.4 MPa

Stirrer speed: 600 rpm

The polymer solution was degassed 3 times with $H_2$ (23 °C, 2 MPa) with vigorous stirring. The temperature of the reactor was raised to 100 °C and the $H_2$ pressure to 6 MPa. A monochlorobenzene solution consisting of Wilkinson catalyst and co-catalyst was added and the pressure was raised to 8.4 MPa while the reactor temperature was adjusted to 137-140 °C. The temperature and pressure were kept constant during the reaction. The course of the reaction was monitored by measuring a residual double bond content by means of IR spectroscopy.

The reaction was terminated when the residual double bond content of <5% had been reached by releasing the hydrogen pressure.

The resulting hydrogenated polymers were isolated from the solution by steam coagulation. For this, the monochlorobenzene solution was diluted to a polymer content of 7% by weight and metered continuously into a stirred glass reactor which was filled with water and preheated to 100°C. At the same time, 0.5 bar steam was used for introduction into the coagulation water. The polymer precipitated as crumbs were dewatered and then dried at 55 °C under vacuum.

The respective hydrogenated polymers, the monomer unit content, % of residual double bonds and Mooney viscosity of which are shown in Table 2a. The spectrum of polymers before, during and after the hydrogenation reaction were recorded on a Perkin Elmer spectrum 100 FT-IR spectrometer.

A solution of the polymer in monochlorobenzene was cast onto a KBr disk and dried to form a film for the test. The hydrogenation conversion is determined by the FT-IR analysis according to the ASTM D 5670-95 method.

**Table 2a.** Monomer unit content, % of residual double bonds and Mooney viscosity of polymers made according to Table 2

| Polymer | I (B) | J (C) | K (D) | L (F) | M (G) | N (H) | O* |
|---|---|---|---|---|---|---|---|
| Acrylonitrile (wt.-%) | 34.5 | 39.8 | 40.3 | 39.3 | 41.0 | 44.6 | 33.3 |
| 1,3-butadiene (wt.-%) | 62.6 | 59.6 | 56.1 | 59.9 | 52.7 | 50.4 | 62 |
| Acetoacetoxyethyl methacrylate (wt.-%) | 2.9 | 0.6 | 3.6 | 6.3 | 3.8 | 5.0 | 0 |
| n-butyl acrylate (wt.-%) | 0 | 0 | 0 | 0 | 0 | 0 | 4.7 |
| Residual double-bonds (%) | ≤ 0.9 | 3.3 | 6.1 | ≤ 0.9 | ≤ 0.9 | 5.2 | ≤ 0.9 |
| Mooney Viscosity ML(1+4) 100°C, (MU) | 86 | 73 | 63 | 72 | 78 | n.d. | 49 |

Passage conductivity

The passage conductivity was measured and the results are shown in Table 3. Note a further comparative example with PVDF as binder material.

**Table 3.** Passage conductivity of polymers according to the invention and comparative examples

| Polymer | Passage conductivity (Scm$^{-1}$) |
|---|---|
| A | $2.03 * 10^{-11}$ |
| B | $7.52 * 10^{-11}$ |
| C | $3.05 * 10^{-11}$ |
| D | $7.81 * 10^{-11}$ |
| E | $5.15 * 10^{-11}$ |
| F | $8.55 * 10^{-11}$ |
| G | $1.75 * 10^{-11}$ |
| H | $1.07 * 10^{-11}$ |
| I | $6.41 * 10^{-11}$ |
| J | $5.29 * 10^{-11}$ |

(continued)

| Polymer | Passage conductivity (Scm$^{-1}$) |
|---------|-----------------------------------|
| K | 8.77 * 10$^{-11}$ |
| L | 1.80 * 10$^{-10}$ |
| M | 7.41 * 10$^{-11}$ |
| N | 4.27 * 10$^{-11}$ |
| O* | 4.48 * 10$^{-11}$ |
| PVDF* | 6.67 * 10$^{-16}$ |

The results from Table 3 show that the polymers according to the invention maintain at least comparable or even better passage conductivity of electrodes compared to PVDF or O* hydrogenated nitrile rubber whilst being halogen free.

Density

The density was measured and the results are shown in Table 4. Note a further comparative example with PVDF as binder material.

Table 4. Density of polymers according to the invention and comparative examples

| Polymer | Density (gcm$^{-3}$) |
|---------|----------------------|
| A | 0.96 |
| B | 1.00 |
| C | n.d. |
| D | n.d. |
| E | 1.01 |
| F | 1.03 |
| G | n.d. |
| H | n.d. |
| I | 0.97 |
| J | 0.99 |
| K | 0.99 |
| L | 0.99 |
| M | 1.00 |
| N | 1.01 |
| O* | 0.96 |
| PVDF* | 1.78 |

The results from Table 4 show that the polymers according to the invention maintain at least comparable and lower density and thus that of ensuing electrodes compared to PVDF or O* hydrogenated nitrile rubber and being halogen free.

Coin cell fabrication

Coin cells containing the respective polymers according to the present invention and the comparative polymers were manufactured according to the following general method.
Dissolution: A certain amount of the polymer was dissolved in solvent (NMP) in a shaker overnight at room temperature to form a binder solution with 5 wt.-%.
Cathode slurry composition preparation: The respective binder solution was mixed with active material (NMC111) and conductive material (conductive carbon black Super P) in a planetary ball mill (milling conditions: 28 Hz, 6 minutes, room temperature) to obtain a cathode slurry composition (Weight ratio: active material/polymer/conductive material = 80/10/10).

Manufacture of cathode disc: The cathode slurry composition was applied with a bar coater onto a current collector (aluminium foil) at a rate of 2.8 mm/s to form a cathode sheet with a coating thickness of 150 $\mu$m.

Drying: The cathode sheet was dried in an oven at 80°C for 120 minutes to remove solvent and moisture. After drying, the cathode sheet was calendared to adjust the areal density (weight: 12-19 mg/disc; disc area: 201 mm$^2$; density: 60-95 g/m$^2$). From the dried cathode sheet a cathode disc (ø 16 mm) was punched using a machine from ShenZhen PengXiang YunDa Machinery Technology Co., Model: PX-CP-S2.

Lithium-ion rechargeable battery coin cell assembly: Assembly and pressing of a Lithium-ion rechargeable battery was carried out in a glove box. The assembly comprises the coin cell casing top (2032 type; negative side), nickel sponge, lithium disc (as anode), porous separator (Celgard 2340), the cathode disc and the casing bottom (positive side). All parts were assembled layer-by-layer. The electrolytic solution was added during assembly, to completely fill a free volume of the coin cell. The coin cell case was pressed by a press machine in the glovebox.

Peel strength

The peel strength was measured, and the result shown in Table 5. Note in % to PVDF as reference.

Table 5. Peel strength of polymers according to the invention and comparative examples

| Polymer | Peel strength (%) |
| --- | --- |
| A | 166 |
| B | 465 |
| C | 542 |
| D | 170 |
| E | 182 |
| F | 339 |
| G | 615 |
| H | 422 |
| I | 191 |
| J | 196 |
| K | 250 |
| L | 212 |
| M | 567 |
| N | 204 |
| O* | 167 |
| PVDF* | 100 |

The results from Table 5 show that the polymers according to the invention have higher peel strengths of electrodes compared to PVDF or O*, significantly better are the hydrogenated polymers according to the invention.

Discharging specific capacity and the capacity retention of cells

A discharging specific capacity and the capacity retention of cells comprising the polymers according to the present invention was measured, and the result shown in Table 6.

Table 6. Discharging specific capacity and the capacity retention of cells comprising the polymers according to the present invention

| Polymer | Discharging specific capacity [mAh/g] | Capacity retention after 30 cycles |
|---|---|---|
| D | 121 | 80 |
| E | 138 | 90 |
| H | 124 | 88 |
| I | 136 | 99 |
| J | 135 | 77 |
| K | 137 | 94 |
| L | 133 | 96 |
| N | 130 | 84 |

The results from Table 6 show that the polymers according to the invention can undergo being charged, discharged and recharged and maintain capacity retention.

**Claims**

1.   A polymer consisting of monomer units acrylonitrile, 1,3-butadiene and acetoacetoxyethyl methacrylate.

2.   The polymer according to claim 1, wherein the polymer is non hydrogenated.

3.   The polymer according to claim 1, wherein the polymer is hydrogenated.

4.   The polymer according to claim 2, wherein the monomer units acetoacetoxyethyl methacrylate are present in the polymer in an amount of 3 - 10 wt.-%.

5.   The polymer according to claim 3, wherein, the monomer units acetoacetoxyethyl methacrylate are present in the polymer in an amount of 0.5 - 7 wt.-%.

6.   The polymer according to claim 2, wherein the monomer units acrylonitrile are present in the polymer in an amount of 18 - 50 wt.-%, the monomer units 1,3-butadiene are present in the polymer in an amount of 40 - 80 wt.-% and the monomer units acetoacetoxyethyl methacrylate are present in the polymer in an amount of 3 - 10 wt.-%.

7.   The polymer according to claim 3, wherein the monomer units acrylonitrile are present in the polymer in an amount of 30 - 45 wt.-%, the monomer units 1,3-butadiene are present in the polymer in an amount of 50 - 65 wt.-% and the monomer units acetoacetoxyethyl methacrylate are present in the polymer in an amount of 0.5 - 7 wt.-%.

8.   A use of the polymer according to any one of the above claims as positive cathode binder for a rechargeable battery.

**Patentansprüche**

1.   Polymer, bestehend aus Acrylnitril-, 1,3-Butadien- und Acetoacetoxyethylmethacrylat-Monomereinheiten.

2.   Polymer nach Anspruch 1, wobei das Polymer nicht hydriert ist.

3.   Polymer nach Anspruch 1, wobei das Polymer hydriert ist.

4.   Polymer nach Anspruch 2, wobei die Acetoacetoxyethylmethacrylat-Monomereinheiten in dem Polymer in einer Menge von 3 - 10 Gew.-% vorhanden sind.

5.   Polymer nach Anspruch 3, wobei die Acetoacetoxyethylmethacrylat-Monomereinheiten in dem Polymer in einer Menge von 0,5 - 7 Gew.-% vorhanden sind.

**6.** Polymer nach Anspruch 2, wobei die Acrylnitril-Monomereinheiten in dem Polymer in einer Menge von 18 - 50 Gew.-% vorliegen, die 1,3-Butadien-Monomereinheiten in dem Polymer in einer Menge von 40 - 80 Gew.-% vorliegen und die Acetoacetoxyethylmethacrylat-Monomereinheiten in dem Polymer in einer Menge von 3 - 10 Gew.-% vorliegen.

**7.** Polymer nach Anspruch 3, wobei die Acrylnitril-Monomereinheiten in dem Polymer in einer Menge von 30 - 45 Gew.-% vorliegen, die 1,3-Butadien-Monomereinheiten in dem Polymer in einer Menge von 50 - 65 Gew.-% vorliegen und die Acetoacetoxyethylmethacrylat-Monomereinheiten in dem Polymer in einer Menge von 0,5 - 7 Gew.-% vorliegen.

**8.** Verwendung des Polymers nach einem der vorhergehenden Ansprüche als Bindemittel für eine positive Kathode für eine wiederaufladbare Batterie.


**Revendications**

**1.** Polymère constitué de motifs monomériques d'acrylonitrile, 1,3-butadiène et méthacrylate d'acétoacétoxyéthyle.

**2.** Polymère selon la revendication 1, dans lequel le polymère est non hydrogéné.

**3.** Polymère selon la revendication 1, dans lequel le polymère est hydrogéné.

**4.** Polymère selon la revendication 2, dans lequel les motifs monomériques de méthacrylate d'acétoacétoxyéthyle sont présents dans le polymère en une quantité de 3 à 10 % en poids.

**5.** Polymère selon la revendication 3, dans lequel les motifs monomériques de méthacrylate d'acétoacétoxyéthyle sont présents dans le polymère en une quantité de 0,5 à 7 % en poids.

**6.** Polymère selon la revendication 2, dans lequel les motifs monomériques d'acrylonitrile sont présents dans le polymère en une quantité de 18 à 50 % en poids, les motifs monomériques de 1,3-butadiène sont présents dans le polymère en une quantité de 40 à 80 % en poids et les motifs monomériques de méthacrylate d'acétoacétoxyéthyle sont présents dans le polymère en une quantité de 3 à 10 % en poids.

**7.** Polymère selon la revendication 3, dans lequel les motifs monomériques d'acrylonitrile sont présents dans le polymère en une quantité de 30 à 45 % en poids, les motifs monomériques de 1,3-butadiène sont présents dans le polymère en une quantité de 50 à 65 % en poids et les motifs monomériques de méthacrylate d'acétoacétoxyéthyle sont présents dans le polymère en une quantité de 0,5 à 7 % en poids.

**8.** Utilisation du polymère selon l'une quelconque des revendications précédentes comme liant de cathode positive pour une batterie rechargeable.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3605675 A1

- EP 3605675 A

**Non-patent literature cited in the description**

- *CHEMICAL ABSTRACTS*, 67701-08-8
- *CHEMICAL ABSTRACTS*, 151-21-3

- *CHEMICAL ABSTRACTS*, 61790-51-0
- *CHEMICAL ABSTRACTS*, 3710-84-7